# EUROPÄISCHE PATENTANMELDUNG

(11) **EP 2 332 714 A1**
(43) Veröffentlichungstag der Anmeldung: **15.06.2011**
(21) Anmeldenummer: 09015280.2
(22) Anmeldetag: 10.12.2009
(51) Int. Cl.: B29C 47/58, B29C 47/06

(54) **Koextrusionsadapter**

(71) Anmelder: Reifenhäuser GmbH & Co. KG Maschinenfabrik, 53844 Troisdorf (DE)
(72) Erfinder: Lauwers, Bianca, 53757 Sankt Augustin (DE); Kaun, Achim, 53819 Neunkirchen (DE); Meyer, Helmut, 53842 Troisdorf (DE)
(74) Vertreter: Müller-Gerbes Wagner Albiger Patentanwälte

(57) **Zusammenfassung**

Die Erfindung betrifft einen Koextrusionsadapter zur Herstellung mehrschichtiger Verbunde aus thermoplastischen Materialien, umfassend ein Gehäuse (10) mit einem in dem Gehäuse (10) angeordneten Zentralkanal (11) mit einer Einlassöffnung (110) und einer Auslassöffnung (111) sowie mindestens einem in den Zentralkanal (11) einmündenden Koextrusionskanal (12), wobei der Zentralkanal (11) und der mindestens eine Koextrusionskanal (12) in Richtung der Auslassöffnung (111) von den thermoplastischen Materialien durchströmbar sind, wobei das Gehäuse (10) eine den Zentralkanal (11) durchsetzende Aufnahmebohrung (100) aufweist, in welche ein Koextrusionsbolzen (13) einsetzbar ist, der seinerseits eine den Zentralkanal (11) fortsetzende Kanalbohrung (130) aufweist und bereichsweise zwischen seiner Außenoberfläche (131) und der Wandung der Aufnahmebohrung (100) einen Teilabschnitt (120) des mindestens einen Koextrusionskanals (12) bildet.

## Beschreibung

Die Erfindung betrifft einen Koextrusionsadapter zur Herstellung mehrschichtiger Verbunde aus thermoplastischen Materialien, umfassend ein Gehäuse mit einem in dem Gehäuse angeordneten Zentralkanal mit einer Einlassöffnung und einer Auslassöffnung sowie mindestens einem in den Zentralkanal einmündenden Koextrusionskanal, wobei der Zentralkanal und der mindestens eine Koextrusionskanal in Richtung der Auslassöffnung von den thermoplastischen Materialien durchströmbar sind.

Derartige Koextrusionsadapter werden für die Zusammenführung von mehreren thermoplastischen Materialien, die üblicherweise auch aus entsprechend mehreren Extrudern stammen, etwa im Rahmen der Herstellung von Folien, Platten und Tafeln verwendet. Hierbei werden die einzelnen thermoplastischen Materialien als thermoplastische Schmelzen im Koextrusionsadapter in der gewünschten Schichtenlage aufeinander geführt und nachfolgend einem Extrusionswerkzeug zur Herstellung des mehrschichtigen Verbundes zugeführt. Hierbei bildet das im Zentralkanal strömende thermoplastische Material mindestens eine innere Schicht und die über die Koextrusionskanäle zugeführten thermoplastischen Materialien werden außenseitig angeordnet.

Beispiele derartiger Koextrusionsadapter sind Gegenstand der DE-OS 3741793, DE 19757827 A1 sowie EP 1621320 A1. Die dort beschriebenen Koextrusionsadapter zeichnen sich dadurch aus, dass man die Schichtverteilung von außen während des Betriebs der Anlage beeinflussen kann. Die Verstellung erfolgt über mehrteilige Verstellelemente. Dies ist für qualitativ sehr hochwerte Produkte unbedingt erforderlich, bedingt jedoch hoch aufwändige und damit kostenintensive Koextrusionsadapter.

Ein konstruktiv einfacherer Koextrusionsadapter ist Gegenstand der US-A-3743460.

Aufgabe der Erfindung ist es, einen kostengünstig herzustellenden und gleichwohl flexibel und schnell an unterschiedliche Produktionsgegebenheiten anpassbaren Koextrusionsadapter vorzuschlagen, der gleichwohl eine hohe Produktqualität ermöglicht.

Zur Lösung der gestellten Aufgabe wird erfindungsgemäß die Ausgestaltung eines Koextrusionsadapters gemäß den Merkmalen des Patentanspruchs 1 vorgeschlagen.

Vorteilhafte Ausgestaltungen und Weiterbildungen des erfindungsgemäßen Koextrusionsadapters sind Gegenstand der abhängigen Ansprüche.

Die Erfindung betrifft ferner auch eine Extrusionsvorrichtung zur Herstellung mehrschichtiger Verbunde aus thermoplastischen Materialien, die mit einem derartigen Koextrusionsadapter gemäß der Erfindung ausgerüstet ist.

Im Rahmen der Erfindung wird vorgeschlagen, den Koextrusionsadapter der eingangs genannten Art dahingehend weiterzubilden, dass das Gehäuse eine den Zentralkanal durchsetzende Aufnahmebohrung aufweist, in welche ein Koextrusionsbolzen einsetzbar ist, der seinerseits eine den Zentralkanal fortsetzende Kanalbohrung aufweist und bereichsweise zwischen seiner Außenoberfläche und der Wandung der Aufnahmebohbrung einen Teilabschnitt des mindestens einen Koextrusionskanals bildet.

Erfindungsgemäß wird somit der im Gehäuse ausgebildete Zentralkanal von der durchsetzenden Aufnahmebohrung vorzugsweise quer durchbrochen, wird jedoch bei eingesetztem Koextrusionsbolzen durch dessen Kanalbohrung fortgesetzt, so dass zwischen der Einlassöffnung und der Auslassöffnung des Gehäuses ein durchgängiger und in einem Teilabschnitt durch den Koextrusionsbolzen verlaufender Zentralkanal im Gehäuse ausgebildet ist, durch welchen thermoplastisches Material im Zuge der Herstellung mehrschichtiger Verbunde strömen kann.

Darüber hinaus ist der Koextrusionsbolzen derart ausgeformt, dass zumindest bereichsweise zwischen seiner Außenoberfläche und der Wandung der Aufnahmebohrung ein gewisser Abstand gegeben ist, welcher einen Teilabschnitt des mindestens einen Koextrusionskanals bildet.

Insofern dient das durch den Zentralkanal und zumindest in einem Teilabschnitt durch die Kanalbohrung des Koexrusionsbolzens strömende thermoplastische Material der Bildung mindestens einer mittleren Schicht, während das thermoplastische Material, welches über den Koextrusionskanal zugeführt wird und zumindest bereichsweise zwischen der Außenoberfläche des Koextrusionsbolzens und der Wandung der Aufnahmebohrung geführt wird, der Ausbildung mindestens einer äußeren Schicht, z.B. einer Deckschicht des herzustellenden mehrschichtigen Verbundes dient.

Eine Anpassung der jeweiligen Schichtdicken der im Zentralkanal und/oder des mindestens einen Koextrusionskanals geführten thermoplastischen Materials an die jeweiligen Produktgegebenheiten, die verwendeten Rohstoffe und deren rheologische Eigenschaften kann somit in fertigungstechnisch einfacher Weise durch unterschiedlich geformte Koextrusionsbolzen vorgenommen werden, die je nach Anwendungsfall in die Aufnahmebohrung des Gehäuses des erfindungsgemäßen Koextrusionsadapters einsetzbar sind und sich durch unterschiedliche Geometrien im Bereich der Kanalbohrung und/oder der Außenwandung im Bereich des Teilabschnittes des mindestens einen Koextrusionskanals auszeichnen.

Nach einem Vorschlag der Erfindung weisen die Kanalbohrung im Koextrusionsbolzen und/oder der Teilabschnitt des mindestens einen Koextrusionskanals, welcher zwischen der Wandung der Aufnahmebohrung und der Außenoberfläche des Koextrusionsbolzens verläuft, einen Querschnitt auf, dessen Gestalt sich in Richtung der Auslassöffnung betrachtet von kreisförmiger auf rechteckige Gestalt ändert. Insoweit dient der Koextrusionsbolzen auch der Überführung der zunächst üblicherweise in einem Kanal mit rundem Querschnitt zugeführten Schmelze des thermoplastischen Materials in einen rechteckigen Querschnittsstrom, der sodann zur Herstellung von Folien, Platten oder Tafeln aus einer Breitschlitzdüse mit solchermaßem rechteckigen Querschnitt extrudiert wird.

Unter kreisförmiger Gestalt wird nicht nur eine exakte Kreisform verstanden, sondern auch ähnliche Querschnittsformen, beispielsweise ovale Querschnittsformen.

Nach einem Vorschlag der Erfindung wird beidseits des Zentralkanals jeweils ein Koextrusionskanal im erfindungsgemäßen Koextrusionsadapter ausgebildet, so dass drei Schichten erhalten werden können, nämlich zwei Deckschichten über je einen Koextrusionskanal und eine Innenschicht über den Zentralkanal.

Nach einem weiteren Vorschlag der Erfindung ist der mindestens eine Koextrusionskanal mit einer Einstelleinrichtung für den vorherrschenden Strömungsquerschnitt ausgerüstet, um eine weitere Beeinflussung der Schichtdicke vornehmen zu können, welche aus dem über den Koextrusionskanal zugeführten thermoplastischen Material gebildet wird. Eine solche Einstelleinrichtung kann beispielsweise von einem den Koextrusionskanal teilweise durchdringenden Bolzen gebildet sein, der als Drosseleinrichtung fungiert und in seinem den Koextrusionskanal durchdringenden Bereich unterschiedlich konturiert sein kann. Somit ist es auch möglich, durch Verdrehen des Bolzens von außen während des laufenden Betriebs eine gewisse Beeinflussung des Strömungsquerschnittes und damit der Schichtenbildung vorzunehmen, die über den Koextrusionskanal bewirkt wird.

Wie bereist vorangehend erläutert, ist bei Ausgestaltung des Koextrusionsadapters mit zwei Koextrusionskanälen die Ausbildung eines dreischichtigen Verbundes möglich. Wenn mehr als drei Schichten innerhalb des herzustellenden Verbundes gewünscht sind, bietet die erfindungsgemäße Ausgestaltung des Koextrusionsadapters die Möglichkeit, mehrere derartige Gehäuse mit eingesetztem Koextrusionsbolzen hintereinander zu schalten, derart, dass sich die jeweiligen Zentralkanäle einander fortsetzen. In Strömungsrichtung betrachtet wird somit zunächst im ersten Gehäuse ein maximal dreischichtiger Verbund erzeugt, der sodann dem zweiten Gehäuse in dessen Zentralkanal gemeinsam zugeführt wird, so dass bis zu zwei weitere Schichten außenseitig auf den zuvor hergestellten dreischichtigen Verbund aufgebracht werden können. Durch entsprechend mehrmaliges Hintereinanderschalten kann man so einen vielschichtigen Schmelzestrang mit beispielsweise 4, 5, 6, 7, 8, 9 usw. Schichten erzeugen, der schließlich dem Werkzeug zugeführt wird, welches dem Koextrusionsadapter gemäß der Erfindung nachgeschaltet ist.

Zur variablen Schichtverteilung kann darüber hinaus im Bereich der Einlassöffnungen des Zentralkanals und des mindestens einen Koextrusionskanals eine Adapterplatte zum Anschluss von Zuführeinrichtungen für die thermoplastischen Materialien vorgesehen sein, die getauscht werden kann, um die Schmelzezuordnung zu den Einzelschichten zu ändern.

Weitere Ausgestaltungen und Einzelheiten der Erfindung werden nachfolgend anhand von Ausführungsbeispielen in der Zeichnung näher erläutert. Es zeigen:
- Figur 1: einen vertikalen Schnitt durch eine erste Ausführungsform des erfindungsgemäßen Koextrusionsadapters;
- Figur 2: einen vertikalen Schnitt durch die erste Ausführungsform des erfindungsgemäßen Koextrusionsadapters in einer gegenüber Figur 1 um 90° gedrehten Schnittebene;
- Figur 3: in perspektivischer Darstellung den Koextrusionsadapter gemäß der ersten Ausführungsform der Erfindung;
- Figur 4: einen vertikalen Schnitt durch eine zweite Ausführungsform des erfindungsgemäßen Koextrusionsadapters;
- Figur 5: einen vertikalen Schnitt durch die zweite Ausführungsform des erfindungsgemäßen Koextrusionsadapters in einer gegenüber Figur 4 um 90° gedrehten Schnittebene;
- Figur 6: den erfindungsgemäßen Koextrusionsadapter gemäß der zweiten Ausführungsform in perspektivischer Darstellung.

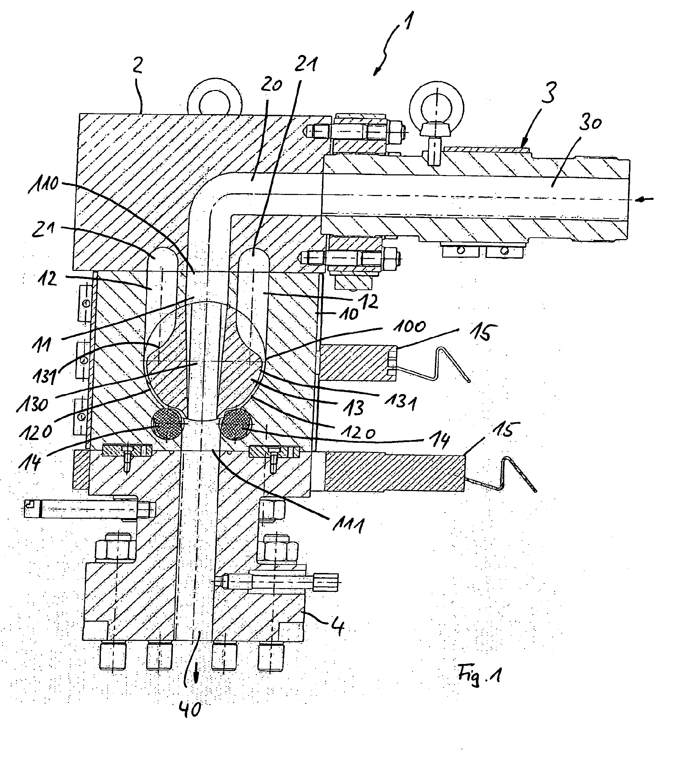

Aus den Figuren 1 bis 3 ist eine erste Ausführungsform eines Koextrusionsadapters ersichtlich, die der Ausbildung eines mehrschichtigen Verbundes aus thermoplastischen Materialien in einem hier nicht dargestellten und dem Koextrusionsadapter 1 nachgeordneten Werkzeug, z.B. einem Breitschlitzwerkzeug zur Herstellung von Folien, Platten oder Tafeln dient.

Der Koextrusionsadapter 1 umfasst zu diesem Zweck mehrere Schmelzeleitungen 3, 5, 6 mit jeweiligen Schmelzekanälen 30, 50, 60, durch die in der durch Pfeile dargestellten Flussrichtung von nicht näher dargestellten Extrudern eine jeweilige Schmelze aus dem thermoplastischen Material dem Koextrusionsadapter 1 zugeführt wird.

Die jeweils zugeführten Schmelzen werden in mit Bezugsziffern 20, 21, gekennzeichneten Umlenkkanälen innerhalb eines Winkelanschlussstückes 2 aus der ursprünglichen Zuführrichtung in eine zu einem Gehäuse 10 gerichtete Strömungsrichtung umgelenkt und treten dann in das mit Bezugszeichen 10 gekennzeichnetes Gehäuse ein, welches wie auch die übrigen Teile des Koextrusionsadapters 1 über außenseitige Heizungen 15 auf eine für den Transport der thermoplastischen Schmelzen geeignete Temperatur temperiert wird.

Der Umlenkkanal 20 mündet hierbei über eine Einlassöffnung 110 in einen innerhalb des Gehäuses 10 ausgebildeten Zentralkanal 11 ein, während die beiden Umlenkkanäle 21 in entsprechend sich im Gehäuse 10 fortsetzende Koextrusionskanäle 12 einmünden.

Sowohl der Zentralkanal 11 als auch die beiden Koextrusionskanäle 12 werden von einer horizontal, d.h. sich quer zur Strömungsrichtung (hier vertikal nach unten) verlaufenden Aufnahmebohrung 100 durchsetzt, welche sich quer durch das Gehäuse 10 erstreckt. In die Aufnahmebohrung 100 ist ein Koextrusionsbolzen 13 abdichtend eingesetzt, der seinerseits eine diametral durch den Koextrusionsbolzen 13 verlaufende Kanalbohrung 130 aufweist, welche so ausgerichtet ist, dass sie den Zentralkanal 11 in Richtung auf die Auslassöffnung 111 desselben fortsetzt und somit einen Teilabschnitt des Zentralkanals 11 bildet.

Hierbei ist die Gestaltung der Kanalbohrung 130 so gewählt, dass sich deren Querschnitt ausgehend von dem der Eintrittsöffnung 110 zugewandten Ende zu dem der Austrittsöffnung 111 zugewandten Ende von einer zunächst kreisförmigen Gestalt in eine rechteckige Gestalt ändert und insoweit ein über die Schmelzekanäle 30, 20 in den Zentralkanal 11 eintretender Strom des thermoplastischen Materials aus einem zunächst zylindrischen in einen quaderförmigen Strang überführt wird, welcher im Anschluss aus dem Zentralkanal 11 über eine Auslassöffnung 111 in ein nachgeordnetes Werkzeuganschlussteil 4 mit entsprechendem Schmelzekanal 40 übertritt.

Darüber hinaus ist der Bolzen, welcher außerhalb des Durchdringungsbereichs von Zentralkanal 11 und Koextrusionskanälen 12 zylindrische Form aufweist und insoweit die Kanalbohrung 130 vollständig ausfüllt, im Bereich der von der Aufnahmebohrung 100 durchsetzten Koextrusionskanäle 12 beidseits des Zentralkanals 11 im Bereich seiner Außenoberfläche 131 so konturiert und ausgeformt, dass ein Abstand bzw. Spalt zur Wandung der Aufnahmebohrung 100 besteht, so dass dieser Spalt einen Teilabschnitt 120 der Koextrusionskanäle 12 ausbildet und insoweit den von der Aufnahmebohrung 100 durchsetzten Koextrusionskanal 12 fortsetzt. Auch in diesem Bereich ist die Querschnittsgestaltung so gewählt, dass der zunächst kreisförmige Querschnitt des Teilabschnitts 120 des mindestens einen Koextrusionskanals 12 allmählich in einen rechteckigen Querschnitt überführt wird, so dass die in den Koextrusionskanälen 12 geführte Schmelze eine solche Querschnittsveränderung erfährt.

Schließlich münden die zwischen der Außenoberfläche 131 des Koextrusionsbolzens 13 und der Wandung der Aufnahmebohrung 100 ausgebildeten Teilabschnitte 120 der jeweiligen Koextrusionskanäle 12 in den Zentralkanal 11 ein, und zwar exakt an der Stelle, an welcher das über die Kanalbohrung 130 im Koextrusionsbolzen 13 geführte thermoplastische Material die Kanalbohrung 130 in Richtung auf die Auslassöffnung 111 des Zentralkanals verlässt, so dass die über die Teilabschnitte 120 geführten thermoplastischen Materialien beidseits außenseitig auf das thermoplastische Material aus der Kanalbohrung 130 aufgelegt werden. Somit wird ein dreischichtiger Verbund erzeugt, der über die Auslassöffnung 111 gemeinsam in den Schmelzekanal 40 im Werkzeuganschlussteil 4 übertritt und von dort dem hier nicht dargestellten Werkzeug zugeführt wird. Dabei bildet das in der Kanalbohrung 130 geführte thermoplastische Material die Innenschicht und die beiden in den Koextrusionskanälen 12 bzw. 120 geführten thermoplastischen Materialien jeweils Deck- bzw. Außenschichten des mehrschichtigen Verbundes.

Der Darstellung gemäß Figur 1 ist überdies zu entnehmen, dass zur Beeinflussung des Strömungsquerschnitts und damit des Dickenprofils der über die Koextrusionskanäle 12 bzw. 120 zugeführten thermoplastischen Materialien Einstelleinrichtungen in Form von den Koextrusionskanal 12 im Teilabschnitt 120 teilweise durchdringenden Bolzen 14 gebildet sind, die eine entsprechend des Produktionsauftrages und der Rheologie der verwendeten thermoplastischen Materialien entsprechende Außenkontur aufweisen und als Drosselstelle dienen. Diese können überdies von außen um ihre eigene Achse gedreht werden, um einen gewissen Einstellspielraum zu erhalten.

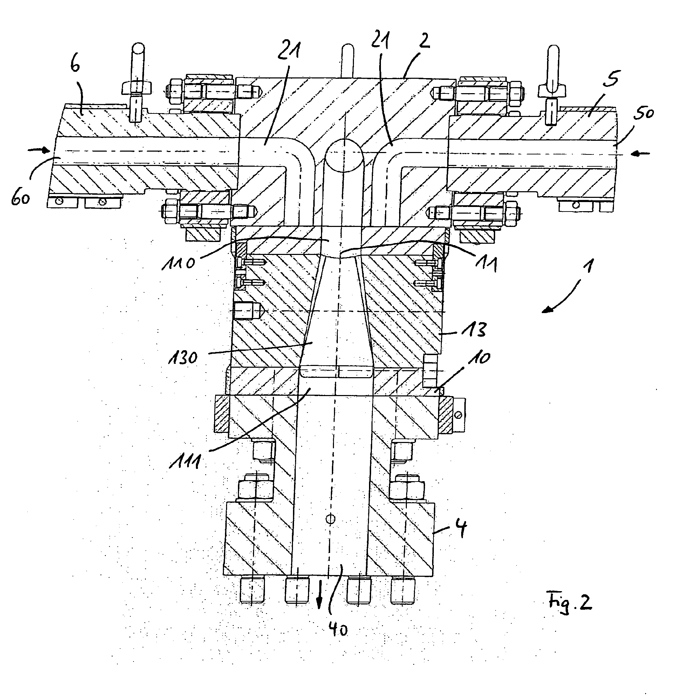

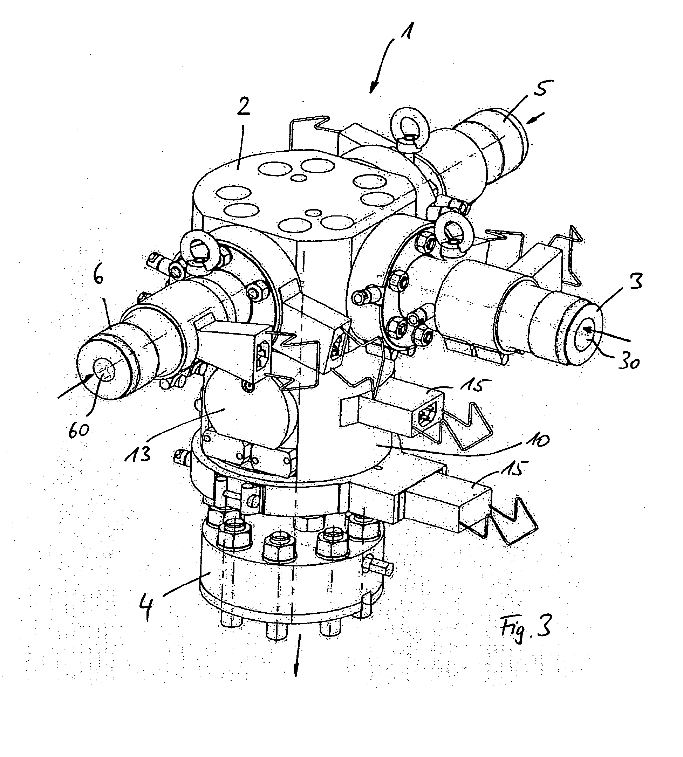

Bei größeren Produktionsumstellungen oder Anpassungen ist es einfach möglich, einen gemäß Darstellung in den Figuren 1 und 2 vorgehaltenen Koextrusionsbolzen 13 von außen aus dem Gehäuse 10 zu entnehmen und gegen einen anderen Koextrusionsbolzen 13 mit angepasster Querschnittsgestaltung im Bereich der Kanalbohrung 130 und/oder der Außenoberfläche 131 auszutauschen, wozu der Koextrusionsbolzen 13 von der Außenseite 1 des Koextrusionsadapters leicht zugänglich ist, siehe Figur 3.

Derartige Koextrusionsbolzen 13 sind mechanisch einfach herzustellen und lassen sich innerhalb kurzer Umrüstzeit im Koextrusionsadapter 1 austauschen.

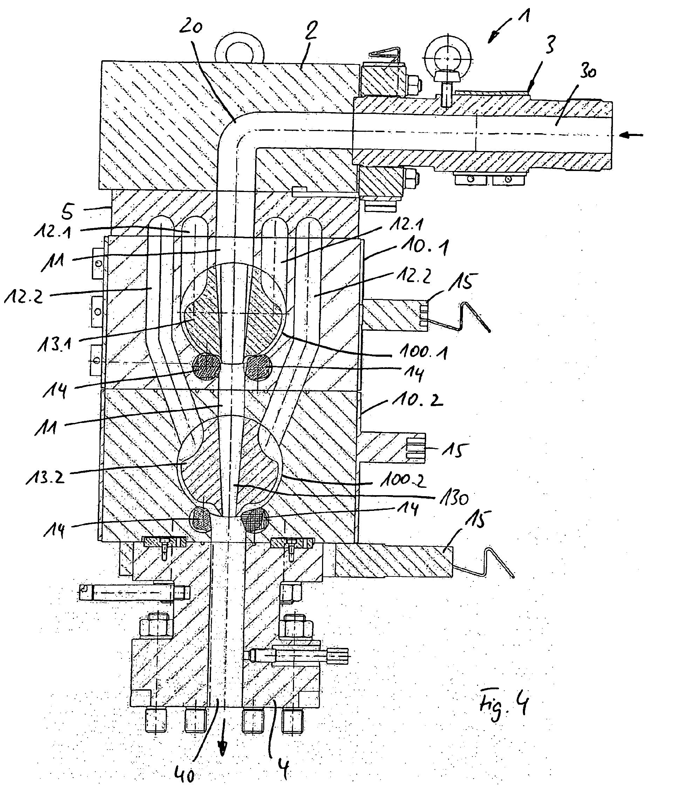

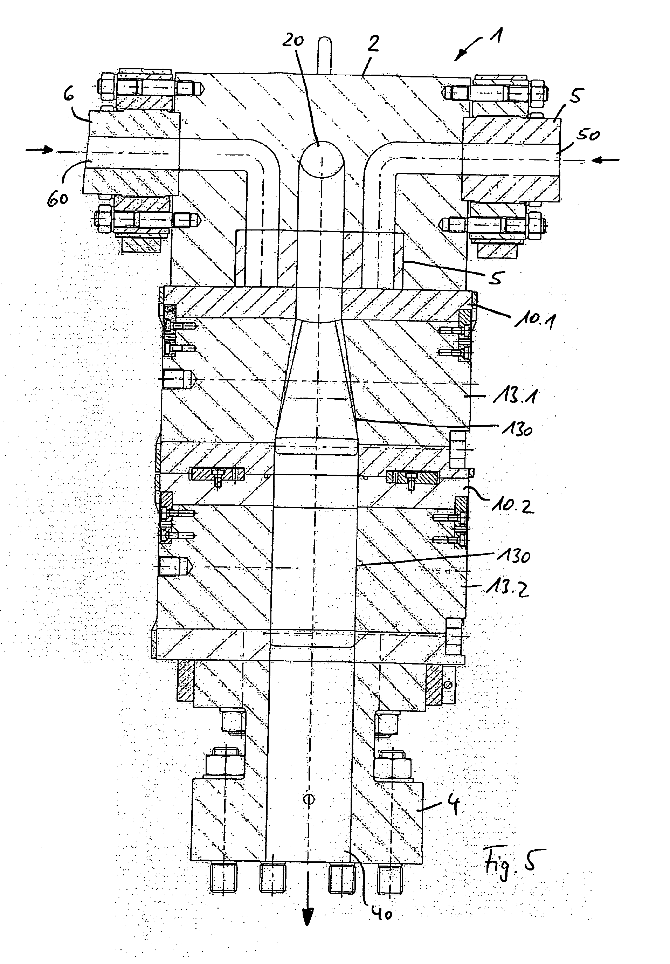

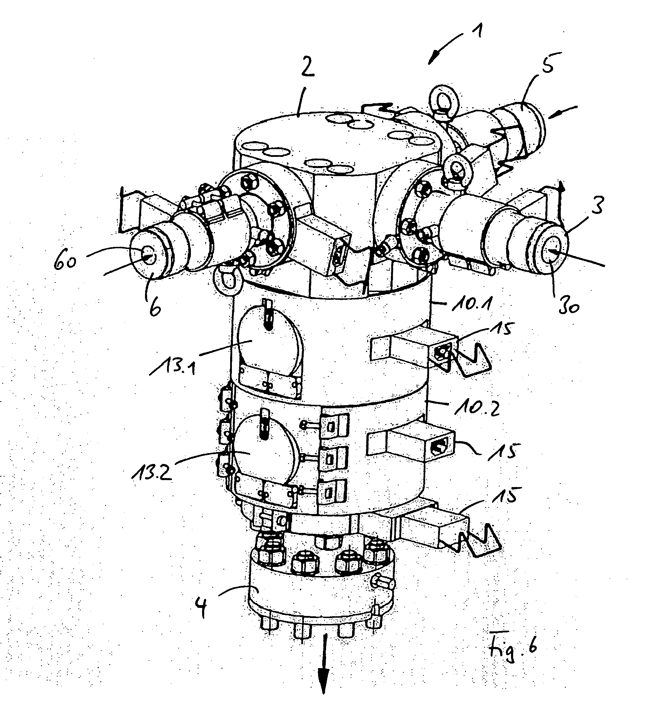

Die Figuren 4 bis 6 zeigen eine gegenüber dem vorangehenden Ausführungsbeispiel gemäß Figuren 1 bis 3 abgeänderte Ausführungsform eines Koextrusionsadapters, wobei gleiche Teile gleiche Bezugszeichen erhalten haben und zur Vermeidung von Wiederholungen nicht nochmals gesondert erläutert werden, sofern dies nicht zum Verständnis der Erfindung erforderlich ist.

Wesentlicher Unterschied der Ausgestaltung gemäß Figuren 4 bis 6 gegenüber der Ausgestaltung gemäß Figuren 1 bis 3 ist es, dass zwei Gehäuse 10.1, 10.2 aufeinanderfolgend innerhalb des Koextrusionsadapters 1 zwischen dem Winkelanschlussstück 2 und dem Werkzeuganschlussteil 4 vorgesehen sind, wobei sich die jeweiligen Zentralkanäle 11 fortsetzen.

In jedem der beiden Gehäuse 10.1 und 10.2 ist jeweils eine Aufnahmebohrung 100.1 bzw. 100.2 vorgesehen, in welcher ein entsprechender Koextrusionsbolzen 13.1, 13.2 gemäß den vorangehenden Erläuterungen eingesetzt ist.

Das in Strömungsrichtung betrachtet erste Gehäuse 10.1 weist neben dem Zentralkanal 11 und den beiden Koextrusionskanälen 12.1 noch Koextrusionskanäle 12.2 auf, die innerhalb des Gehäuses 10.1 noch nicht in den Zentralkanal 11 einmünden, sondern im nachgeordneten Gehäuse 10.2. fortgesetzt werden und dort entlang des Außenumfangs des eingesetzten Koextrusionsbolzens 13.2 als äußerste Schichten auf die im Zentralkanal 11 geführte Schichtenfolge aufgelegt werden.

Insoweit tritt aus dem ersten Gehäuse 10.1 aus dessen Austrittsöffnung ein zunächst dreischichtiger Verbund, gebildet aus der über die Schmelzekanäle 30, 20 herangeführten inneren Schicht und den beiden außenseitig aufgebrachten Schichten aus den Koextrusionskanälen 12.1 in den Zentralkanal 11 des zweiten Gehäuses 10.2 ein und wird dort durch die Kanalbohrung 130 des dortigen Koextrusionsbolzens 13.2 gemeinsam hindurchgeführt, wobei andererseits über die Koextrusionskanäle 12.2 zwei weitere und sodann als äußerste bzw. Deckschichten verwendete äußere Schichten auf den solchermaßen im Koextrusionskanal 130 geführten dreischichtigen Vorverbund aufgebracht werden.

Mit der Ausgestaltung gemäß Figuren 4 bis 6 ist es somit möglich, einen maximal fünfschichtigen Verbund herzustellen.

Es versteht sich, dass analog zu der in den Figuren 4 bis 6 gezeigten zweifachen Hintereinanderschaltung von Gehäusen 10.1, 10.2 auch entsprechend höhere Anzahlen von Hintereinanderschaltungen von Gehäusen 10.1, 10.2 zur Erzielung noch größerer Schichtenanzahlen vorgenommen werden können.

## Patentansprüche

1. Koextrusionsadapter (1) zur Herstellung mehrschichtiger Verbunde aus thermoplastischen Materialien, umfassend ein Gehäuse (10) mit einem in dem Gehäuse (10) angeordneten Zentralkanal (11) mit einer Einlassöffnung (110) und einer Auslassöffnung (111) sowie mindestens einem in den Zentralkanal einmündenden Koextrusionskanal (12), wobei der Zentralkanal (11) und der mindestens eine Koextrusionskanal (12) in Richtung der Auslassöffnung (111) von den thermoplastischen Materialien durchströmbar sind, **dadurch gekennzeichnet, dass** das Gehäuse (10) eine den Zentralkanal (11) durchsetzende Aufnahmebohrung (100) aufweist, in welche ein Koextrusionsbolzen (13) einsetzbar ist, der seinerseits eine den Zentralkanal (11) fortsetzende Kanalbohrung (130) aufweist und bereichsweise zwischen seiner Außenoberfläche (131) und der Wandung der Aufnahmebohrung (100) einen Teilabschnitt des mindestens einen Koextrusionskanals (12) bildet.

2. Koextrusionsadapter (1) nach Anspruch 1, **dadurch gekennzeichnet, dass** die Kanalbohrung (130) im Koextrusionsbolzen (13) und/oder der Teilabschnitt des mindestens einen Koextrusionskanals (12) in Richtung der Auslassöffnung (111) betrachtet einen sich von kreisförmiger auf rechteckige Gestalt ändernden Querschnitt aufweist.

3. Koextrusionsadapter (1) nach Anspruch 1 oder 2, **dadurch gekennzeichnet, dass** beidseits des Zentralkanals (11) jeweils ein Koextrusionskanal (12) ausgebildet ist.

4. Koextrusionsadapter (1) nach einem der Ansprüche 1 bis 3, **dadurch gekennzeichnet, dass** der mindestens eine Koextrusionskanal (12) mit einer Einstelleinrichtung für den Strömungsquerschnitt ausgerüstet ist.

5. Koextrusionsadapter (1) nach Anspruch 4, **dadurch gekennzeichnet, dass** die Einstelleinrichtung von einem den Koextrusionskanal (12) teilweise durchdringenden Bolzen (14) gebildet ist.

6. Koextrusionsadapter (1) nach einem der Ansprüche 1 bis 5, **dadurch gekennzeichnet, dass** mehrere Koextrusionsbolzen (13) mit im Bereich der Kanalbohrung (130) und/oder im Bereich der dem Teilabschnitt des mindestens einen Koextrusionskanales (12) zugewandten Außenoberfläche (131) unterschiedlich ausgebildeter Geometrie vorgesehen sind und wahlweise in die Aufnahmebohrung (100) des Gehäuses (10) einsetzbar sind.

7. Koextrusionsadapter (1) nach einem der Ansprüche 1 bis 6, **dadurch gekennzeichnet, dass** mehrere Gehäuse (10.1, 10.2) aufeinanderfolgend vorgesehen sind, deren Zentralkanäle (11) einander fortsetzen.

8. Koextrusionsadapter (1) nach einem der Ansprüche 1 bis 7, **dadurch gekennzeichnet, dass** im Bereich der Einlassöffnungen (110, 120) des Zentralkanals (11) und des mindestens einen Koextrusionskanals (12) eine Adapterplatte (5) zum Anschluss von Zuführeinrichtungen (2, 3, 5, 6) für die thermoplastischen Materialien vorgesehen ist.

9. Extrusionsvorrichtung zur Herstellung mehrschichtiger Verbunde aus thermoplastischen Materialien, umfassend mindestens einen Extruder für die thermoplastischen Materialien, einen mit dem mindestens einen Extruder kommunizierenden Koextrusionsadapter (1) und ein dem Koextrusionsadapter (1) nachgeordnetes Werkzeug, **gekennzeichnet durch** Ausbildung des Koextrusionsadapters (1) nach einem der vorhergehenden Ansprüche.
